# EUROPEAN PATENT APPLICATION

(11) **EP 1 980 960 A2**
(43) Date of publication of application: **15.10.2008**
(21) Application number: 08153000.8
(22) Date of filing: 19.03.2008
(51) Int. Cl.: G06F 17/30

(54) **Methods and apparatuses for converting electronic content descriptions**

(30) Priority: 21.03.2007 US 689382
(71) Applicant: Ricoh Company, Ltd., Tokyo 143-8555 (JP)
(72) Inventor: Erol, Berna, Menlo Park, CA 94025-7022 (US); Berkner, Kathrin, Menlo Park, CA 94025-7022 (US)
(74) Representative: Schwabe - Sandmair - Marx

(57) **Abstract**

A method, apparatus and article of manufacture for creating visualizations of electronic audiovisual compositions are described. In one embodiment, a method comprises: receiving an electronic composition description; rendering a visual representation of electronic visual composition description; generating a content description that includes semantic information and location information for elements within the electronic audiovisual composition description; identifying one or more audible, visual, and audiovisual elements from the content description; and generating a multimedia overview of the electronic composition description that includes a selected set of the identified one or more audible, visual, and audiovisual elements.

## Description

A portion of the disclosure of this patent document contains material which is subject to (copyright or mask work) protection. The (copyright or mask work) owner has no objection to the facsimile reproduction by anyone of the patent document or the patent disclosure, as it appears in the Patent and Trademark Office patent file or records, but otherwise reserves all (copyright or mask work) rights whatsoever.

### FIELD OF THE INVENTION

The present invention is related to processing and presenting electronic audiovisual compositions; more particularly, the present invention is related to composing electronic audiovisual compositions in such a way as to have audible and/or visual information in the electronic audiovisual compositions identified and have audible information synthesized to play when displaying a representation of a portion of the electronic audiovisual compositions.

### BACKGROUND OF THE INVENTION

With the increased ubiquity of wireless networks, mobile work, and personal mobile devices, more people browse and view web pages, photos, and even documents using small displays and limited input peripherals. One current solution for web page viewing using small displays is to design simpler, low-graphic versions of web pages. Photo browsing problems are also partially solved by simply showing a low resolution version of photos and giving the user the ability to zoom in and scroll particular areas of each photo.

Browsing and viewing documents, on the other hand, is a much more challenging problem. Documents may be multi-page, have a much higher resolution than photos (requiring much more zooming and scrolling at the user's side in order to observe the content), and have highly distributed information (e.g., focus points on a photo may be only a few people's faces or an object in focus where a typical document may contain many focus points, such as title, authors, abstract, figures, references). The problem with viewing and browsing documents is partially solved for desktop and laptop displays by the use of document viewers and browsers, such as Adobe Acrobat (www.adobe.com) and Microsoft Word (www.microsoft.com). These allow zooming in a document, switching between document pages, and scrolling thumbnail overviews. Such highly interactive processes can be acceptable for desktop applications, but a better solution for document browsing and viewing is needed for document browsing on mobile devices (e.g., phones and PI7As) that have limited input peripherals, with limited input and smaller displays.

Ricoh Innovations of Menlo Park, California developed a technology referred to herein as SmartNail Technology. SmartNail Technology creates an alternative image representation adapted to given display size constraints. SmartNail processing may include three steps: (1) an image analysis step to locate image segments and attach a resolution and importance attribute to them, (2) a layout determination step to select visual content in the output thumbnail, and (3) a composition step to create the final SmartNail image via cropping, scaling, and pasting of selected image segments. The input, as well as the output of SmartNail processing, is a still image. All information processed during the three steps results in static visual information. For more information, see U.S. Patent Application No. 10/354,811, entitled "Reformatting Documents Using Document Analysis Information," filed Jan. 29, 2003, published July 29, 2004 (Publication No. US 2004/0146199 A1); U.S. Patent Application No. 10/435,300, entitled "Resolution Sensitive Layout of Document Regions," filed May 9, 2003, published July 29, 2004 (Publication No. US 2004/0145593 A1); and U.S. Patent Application No. 11/023,142, entitled "Semantic Document Smartnails," filed on December 22, 2004, published June 22, 2006 (Publication No. US 2006-0136491 A1).

Web page summarization, in general, is well-known in the prior art to provide a summary of a webpage. However, the techniques to perform web page summarization are heavily focused on text and usually does not introduce new channels (e.g., audio) that are not used in the original web page. Exceptions include where audio is used in browsing for blind people as is described below and in U.S. Patent No. 6,249,808.

Maderlechner et al. discloses first surveying users for important document features, such as white space, letter height, etc and then developing an attention based document model where they automatically segment high attention regions of documents. They then highlight these regions (e.g., making these regions print darker and the other regions more transparent) to help the user browse documents more effectively. For more information, see Maderlechner et al., "Information Extraction from Document Images using Attention Based Layout Segmentation," Proceedings of DLIA, pp. 216-219, 1999.

At least one technique in the prior art is for non-interactive picture browsing on mobile devices. This technique finds salient, face and text regions on a picture automatically and then uses zoom and pan motions on this picture to automatically provide close ups to the viewer. The method focuses on representing images such as photos, not document images. Thus, the method is image-based only, and does not involve communication of document information through an audio channel For more information, see Wang et al., "MobiPicture - Browsing Pictures on Mobile Devices," ACM MM'03, Berkeley, Nov. 2003 and Fan et al., "Visual Attention Based Image Browsing on Mobile Devices," International Conference on Multimedia and Exp, vol.1, pp. 53-56, Baltimore, MD, July 2003.

Conversion of documents to audio in the prior art mostly focuses on aiding visually impaired people. For example, Adobe provides a plug-in to Acrobat reader that synthesizes PDF documents to speech. For more information, see Adobe, PDF access for visually impaired, http://www.adobe.com/support/salesdocs/10446.htm. Guidelines are available on how to create an audiocassette from a document for blind or visually impaired people. As a general rule, information that is included in tables or picture captions is included in the audio cassette. Graphics in general should be omitted. For more information, see "Human Resources Toolbox," Mobility International USA, 2002, www.miusa.org/publications/Hrtoolboxintro.htm. Some work has been done on developing a browser for blind and visually impaired users. One technique maps a graphical HTML document into a 3D virtual sound space environment, where non-speech auditory cures differentiate HTML documents. For more information, see Roth et al., "Auditory browser for blind and visually impaired users," CHI'99, Pittsburgh, Pennsylvania, May 1999. In all the applications for blind or visually impaired users, the goal appears to be transforming as much information as possible into the audio channel without having necessarily constraints on the channel and giving up on the visual channel completely.

Other prior art techniques for use in conversion of messages includes U.S. Patent No. 6,249,808, entitled "Wireless Delivery of Message Using Combination of Text and Voice," issued June 19, 2001. As described therein, in order for a user to receive a voicemail on a handheld device, a voicemail message is converted into a formatted audio voicemail message and formatted text message. The portion of the message that is converted to text fills the available screen on the handheld device, while the remainder of the message is set as audio.

### SUMMARY OF THE INVENTION

Methods and apparatuses for converting electronic content descriptions are described. In one embodiment, a method comprises: receiving an electronic composition description; rendering a visual representation of electronic visual composition description; generating a content description that includes semantic information and location information for elements within the electronic audiovisual composition description; identifying one or more audible, visual, and audiovisual elements from the content description; and generating a multimedia overview of the electronic composition description that includes a selected set of the identified one or more audible, visual, and audiovisual elements.

In another embodiment, an apparatus comprises means for receiving an electronic composition description; means for rendering a visual representation of electronic visual composition description; means for generating a content description that includes semantic information and location information for elements within the electronic composition description; means for identifying at least one of an audible, visual, an audiovisual element from the content description; and means for generating a multimedia overview of the electronic composition description that includes a selected set of the identified audible, visual, and audiovisual elements.

### BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.
**Figure 1** is a flow diagram of one embodiment of a process for creating a multimedia representation of an electronic visual composition;
**Figure 2** is a flow diagram of another embodiment of processing components for generating a multimedia overview of an electronic audiovisual composition;
**Figure 3A** is a flow diagram of one embodiment for processing a real-time rendered electronic audiovisual composition;
**Figure 3B** is a flow diagram of another embodiment for processing a real-time rendered electronic audiovisual composition;
**Figure 4** is a flow diagram of one embodiment for processing a presentation electronic audiovisual composition;
**Figure 5** is a flow diagram of one embodiment for processing a non-document image;
**Figure 6** is a flow diagram of one embodiment for processing a electronic audiovisual composition with inherent time progression attributes; and
**Figure 7** is a block diagram of one embodiment of a computer system.
**Figure 8** illustrates generating a multi-media representation using a document object model and a visual representation.
**Figure 9** illustrates generating a multi-media representation using a visual representation and a representation having limited semantic information and page and location information.
**Figure 10** **illustrates one embodiment of an optimizer.**

### DETAILED DESCRIPTION OF THE PRESENT INVENTION

A method and apparatus for generating multimedia overviews of electronic audiovisual compositions, referred to herein as Multimedia Thumbnails (MMNails), are described. The techniques represent electronic audiovisual compositions on devices with small displays via utilizing both audio and visual channels and spatial and temporal dimensions. For purposes herein, an electronic audiovisual composition is an electronic visual and/or audio composition. The MMNail can be considered an automated guided tour through an electronic audiovisual composition.

In one embodiment, MMNails contain the most important visual and audible (e.g., keywords) elements of an electronic audiovisual composition and presents these elements in both the spatial domain and the time dimension. A MMNail may result from analyzing, selecting and synthesizing information considering constraints given by the output device (e.g., size of display, limited image rendering capability) or constraints on an application (e.g., limited time span for playing audio).

In the following description, numerous details are set forth to provide a more thorough explanation of the present invention. It will be apparent, however, to one skilled in the art, that the present invention may be practiced without these specific details. In other instances, well-known structures and devices are shown in block diagram form, rather than in detail, in order to avoid obscuring the present invention.

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

### Overview

A selection scheme is set forth below that takes visual, audible, and audiovisual elements of an electronic audiovisual composition and based on the time and information content (e.g., importance) attributes, and time, display, and application constraints, selects a combination and navigation path of the electronic visual composition's elements. In so doing, a multimedia representation of the electronic visual composition may be created.

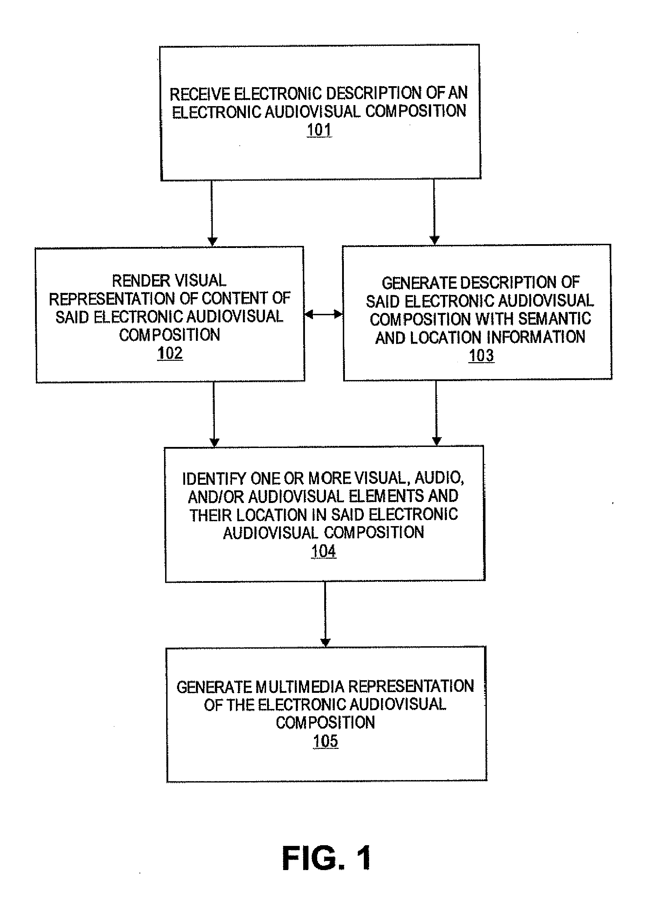

Figure 1 is a flow diagram of one embodiment of a process for creating a multimedia representation of an electronic audiovisual compositions. The process is performed by processing logic that may comprise hardware (e.g., circuitry, dedicated logic, etc.), software (such as is run on a general purpose computer system or a dedicated machine), or a combination of both.

Referring to Figure 1, the process begins by processing logic receiving an electronic description of an electronic audiovisual composition (processing block 101). An electronic audiovisual composition includes, but is not limited to, documents rendered in real time (e.g., HTML Web pages, WAP pages, Microsoft Word files, Flash documents, FlashPaper, etc.), presentation documents (e.g., Microsoft Power Point slides framemaker, adobe premiere files), non-document images (e.g., single or multi-page images, such as whiteboard images, a scanned business card, an image of a poster, boards, signs, partial document images, etc.), multimedia presentations with inherent time progression attributes (e.g., such as web blogs, news papers, Microsoft Power Point presentation files, etc.), SMIL files, audio and visual files.

With the received electronic description of an electronic visual composition, processing logic renders a visual representation of content of the electronic visual composition (processing block 102) and generates a description of the electronic visual composition with semantic and location information for elements of the description (processing block 103). Furthermore, processing logic may optionally compare the rendered visual representation of content with the generated description (processing blocks 102 and 103).

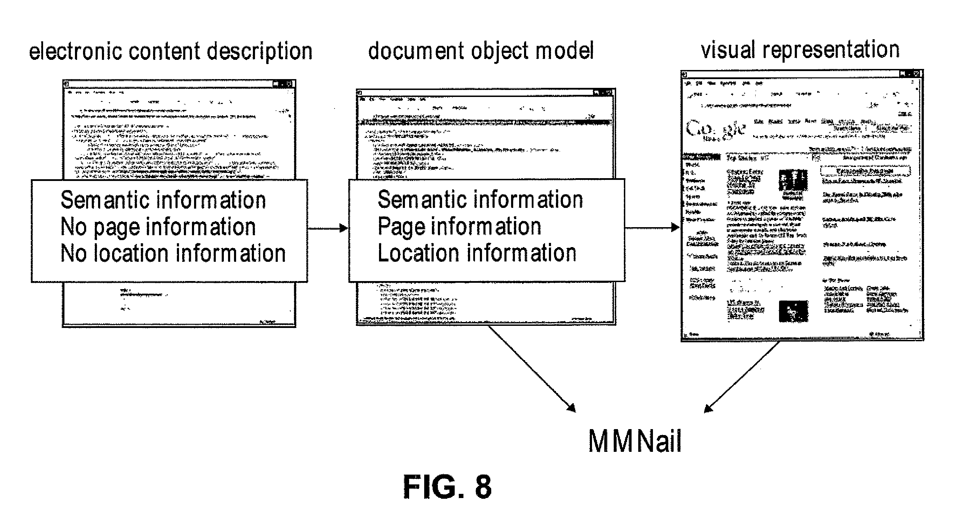

The processing logic generates a content representation with semantic and location information in a number ways. In one embodiment, the electronic content description includes semantic information, but no page or location information. In this case, in one embodiment, processing logic generates a document object model (DOM) (World Wide Web Consortium, Document Object Model Level 1 Specification, ISBN-10: 1583482547, Iuniverse Inc, 2000) in a manner well known in the art, which may include page and/or location information depending on the electronic content description type. From that information, a visual representation (e.g., JPEG) may be generated. In one embodiment, this is done by taking the text from the document object model and looking for matching text in the visual representation. Alternatively, the absolute position of an element may be obtain from the DOM model and then rendered accordingly. Using the document object model and the visual representation, a multi-media representation of the content description may be generated. This is shown in Figure 8.

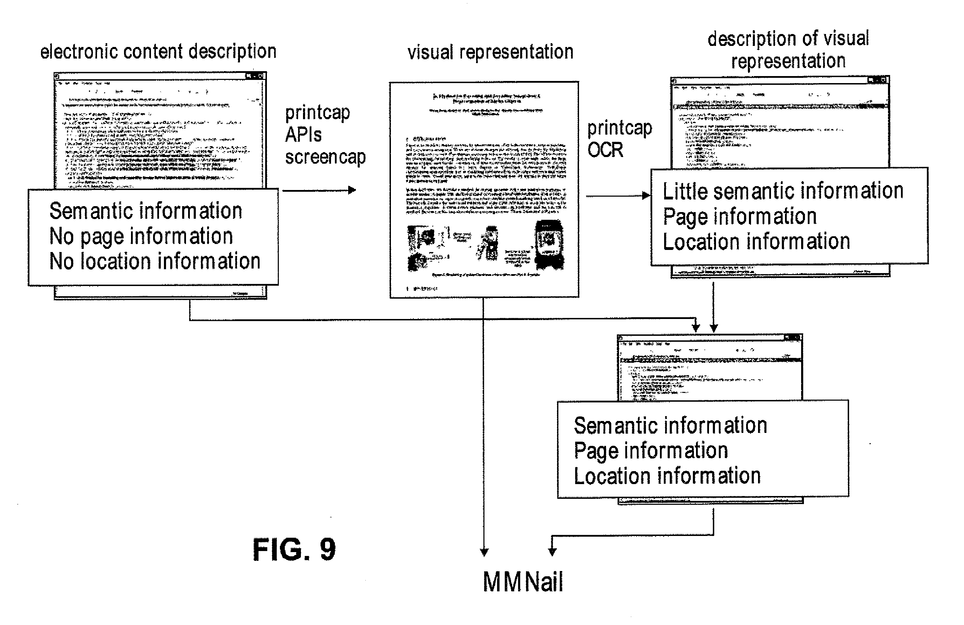

In another embodiment, the electronic content description, which contains semantic information, but no page and location information, may be used to generate a content representation. In this case, a visual representation may initially be created by using a print capture function, a screen capture function, or one or more APIs. Then, using a print capture or OCR function, another description of the visual representation may be generated from the visual representation just generated. In this case, this description of the visual representation has limited semantic information, yet would include page and location information. From the description of the visual representation and the original electronic content description, the semantic information, page information and location information from each may be combined into a representation that has limited semantic information, page information and a location information. Using this representation and the visual representation, the multi-media representation may be generated. This is shown in Figure 9.

Processing logic then identifies one or more visual, audible, and/or audiovisual elements of, and their location in, the electronic visual composition (processing block 104). As will be discussed in greater detail below, the identified element(s) may be identified by processing logic based on visual saliency of an element, semantic importance of an element, etc.

With the identified visual, audio, and audiovisual electronic composition elements, processing logic generates a multimedia representation of the electronic visual composition using the set of one or more of the audible, visual and audiovisual elements (processing block 105).

A discussion of how the audible, visual and audiovisual elements are obtained for various electronic audiovisual composition types is discussed in greater detail below.

In one embodiment, processing logic composes a multimedia thumbnail that contains the most important visual and audible (e.g., keywords) elements of a visual composition, for presentation of these elements in both the spatial domain and the time domain. Furthermore, the generated multimedia thumbnail results from analyzing, selecting, and synthesizing considering constraints given by an output device (e.g., size of display, limited image rendering capability) or constraints of an application (e.g., limited time span for playing audio). In one embodiment, processing logic generates the multimedia representation by outputting a navigation path by which the set of one or more of the identified audible, visual and audiovisual elements are processed when creating the multimedia representation. A navigation path defines how audible, visual, and audiovisual elements are presented to the user in a time dimension in a limited display area. It also defines the transitions between such elements. A navigation path may include ordering of elements with respect to start time, locations and dimensions of electronic audiovisual composition elements, the duration of focus of an element, the transition type between electronic audiovisual composition elements (e.g., pan, zoom, fade-in), and the duration of transitions, etc. This may include reordering the set of the audible, visual and audiovisual elements in reading order.

In one embodiment, the audio channel is used to indicate some navigation events such as, for example, the flipping of pages, making a certain sound when going to a full page view.

### Obtaining Audible Visual and Audiovisual Electronic Composition Elements

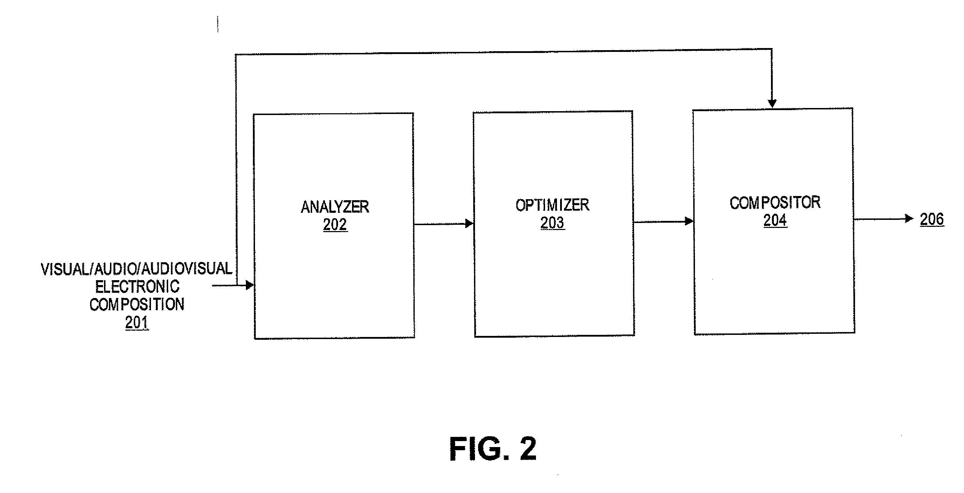

Figure 2 is a flow diagram of another embodiment of processing components for generating multimedia overviews of an electronic visual composition. In one embodiment, each of the modules comprises hardware (e.g., circuitry, dedicated logic, etc.), software (such as is run on a general purpose computer system or a dedicated machine), or a combination of both.

In one embodiment, analyzer 202 performs an element extraction and semantic labeling based on electronic audiovisual composition type 202A, as well as a visual focus points identification, important audible and audiovisual information identification.

Referring to Figure 2, analyzer 202 receives an electronic visual composition 201. In one embodiment, the electronic visual composition includes, or is accompanied by metadata (not shown). The metadata may include author information and creation data, text (e.g., in a pdf file format where the text may be metadata and is overlayed with the an image of the associated document), an audio or video stream, URLs, publication name, date, place, access information, encryption information, image and scan resolution, MPEG-7 descriptors etc. In response to these inputs, analyzer 202 performs visual, audible, and audiovisual element extraction and semantic labeling based on the type of electronic visual composition 202A received by analyzer 202. As discussed above, an electronic audiovisual composition may include, but not be limited to a real-time rendered document, a presentation document, a non-document image, or documents with inherent time progression attributes.

Element extraction and semantic labeling generates output information indicative of one or more visual focus points in the electronic audiovisual composition, information indicative of audible information in the electronic audiovisual composition, and information indicative of audiovisual information in the electronic audiovisual composition. If information extracted from a electronic audiovisual composition element is indicative of visual and audible information, this element is a candidate for an audiovisual element. An application or user may determine the final selection of audiovisual element out of the set of candidates. Audible and visual information in the audiovisual element may be synchronized (or not). For example, an application may require figures in an electronic audiovisual composition and their captions to be synchronized. The audible information may be information that is important in the electronic audiovisual composition and/or accompanying electronic audiovisual composition metadata.

In one embodiment, the element extraction and semantic labeling based on electronic audiovisual composition type performs one or more of optical character recognition (OCR), layout analysis and extraction, JPEG 2000 compression and header extraction, electronic audiovisual composition flow analysis, font extraction, face detection and recognition, graphics extraction, and music notes recognition, which is performed depending on the application. In one embodiment, the element extraction and semantic labeling unit includes Expervision OCR software (www.expervision.com) to perform layout analysis on characters and generates bounding boxes and associated attributes, such as font size and type. In another embodiment, bounding boxes of text zones and associated attributes are generated using ScanSoft software (www.nuance.com). In another embodiment, a semantic analysis of the text zone is performed in the manner described in Aiello M., Monz, C., Todoran, L., Worring, M., "Document Understanding for a Broad Class of Documents," International Journal on Document Analysis and Recognition (IJDAR), vol. 5(1), pp. 1-16, 2002, to determine semantic attributes such as, for example, title, heading, footer, and figure caption.

Element extraction and semantic labeling unit may further include parsing and content gathering based on any received metadata included in or accompanying electronic audiovisual composition 201. For example, in one embodiment, element extraction and semantic labeling unit, given an author's name as metadata, extracts the author's picture from the world wide web (WWW) (which can be included in the MMNail later).

Because analyzer 202 may receive any of real-time rendered documents, presentation documents, non-document images, or documents with inherent time progression, element extraction and semantic labeling is based on the type of electronic audiovisual composition received. More specifically, in one embodiment, the element extraction and semantic labeling are performed based on the content type received, while the assignment of attributes performed by analyzer 202 is not based on the type of content viewed. The processes performed for element extraction and semantic labeling for each type of document are discussed below.

After element extraction and semantic labeling unit, visual focus point identification determines and extracts visual focus segments, while the important audible and audiovisual information identification determines and extracts important audible data, as well as important audiovisual data.

In one embodiment, the visual focus point identification identifies visual focus points based on element extraction and semantic labeling results and/or a XML parsing results from unit 202A.

In one embodiment, performing the visual focus point (VFP) identification includes analysis techniques set forth in U.S. Patent Application No. 101435,300, entitled "Resolution Sensitive Layout of Document Regions," filed May 9, 2003, published July 29, 2004 (Publication No. US 2004/0145593 A1) to identify text zones and attributes (e.g., importance and resolution attributes) associated therewith. Text zones, may include a title and captions, which are interpreted as segments. In one embodiment, the visual focus points identifier determines the title and figures as well. In one embodiment, figures are segmented.

In one embodiment, the audible and audiovisual information identification identifies audible and audiovisual information in response to processes such as OCR, layout analysis, XML parsing, etc.

Examples of visual focus segments include figures, titles, text in large fonts, pictures with people in them, etc. Note that these visual focus points may be application dependent. In one embodiment, bulleted lists or other types of identifiable listings are captured as document element types. Also, attributes such as resolution and saliency attributes are associated with this data. The resolution may be specified as metadata. In one embodiment, these visual focus segments are determined in the same fashion as specified in U.S. Patent Application No. 10/435,300, entitled "Resolution Sensitive Layout of Document Regions," filed May 9, 2003, published July 29, 2004 (Publication No. US 2004/0145593 A1). In another embodiment, the visual focus segments are determined in the same manner as described in Le Meur, O., Le Callet, P., Barba, D., Thoreau, D., "Performance assessment of a visual attention system entirely based on a human vision modeling," Proceedings of ICIP 2004, Singapore, pp. 2327-2330, 2004. Saliency may depend on the type of visual segment (e.g., text with large fonts may be more important than text with small fonts, or vice versa depending on the application). The importance of these segments may be empirically determined for each application prior to multimedia presentation generation. For example, an empirical study may find that the faces in figures and small text are the most important visual points in an application where the user assess the scan quality of an electronic composition (e.g., white board scan, business card scan, poster scan, etc.). The salient points can also be found by using one of the document and image analysis techniques in the prior art.

Examples of audible information include titles, figure captions, keywords, and parsed meta data, including any text and number that occur in the figure, graph, table, photo, etc. For example, the title, labels of x and y axis of a graph can be synthesized and subsequently played back in the audio channel.

### Attributes

Attributes, e.g., information content, relevance (saliency) and time attributes (duration after synthesizing to speech) are also attached to the audible information. Information content of audible segments may depend on its type. For example, an empirical study may show that title and figure captions are the most important audible information in an electronic audio visual composition for a summary application.

Some attributes of VFPs, audio information, and audiovisual information can be assigned using cross analysis. For example, the time attribute of a figure (VFP) can be assigned to be the same as the time attribute of a figure caption (i.e., audio or audiovisual information).

In one embodiment, Term Frequency-Inverse Document Frequency (TFIDF) analysis is performed to automatically determine keywords based on frequency, such as described in Matsuo, Y., Ishizuka, M. "Keyword Extraction from a Single Document using Word Co-occurrence Statistical Information," International Journal on Artificial Intelligence Tools, vol.13, no.1, pp. 157-169, 2004 or key paragraphs as in Fukumoto, F., Suzuki, Y., Fukumoto, J., "An Automatic Extraction of Key Paragraphs Based on Context Dependency," Proceedings of Fifth Conference on Applied Natural Language Processing, pp. 291-298, 1997. For each keyword, the audible and audiovisual information identifier 202C computes a time attribute as being the time it takes for a synthesizer to speak that keyword.

In a similar fashion, time attributes for selected text zones, such as, for example, title, headings, and figure captions, are computed. Each time attribute is correlated with its corresponding segment. For example, the figure caption time attribute is also correlated with the corresponding figure segment. In one embodiment, each audible information segment also carries an information content attribute that may reflect the visual importance (based on font size and position on a page) or reading order in case of text zone, the frequency of appearance in the case of keywords, or the visual importance attribute for figures and related figure captions. In one embodiment, the information content attribute is calculated in the same way as described in U.S. Patent Application No. 10/435,300, entitled "Resolution Sensitive Layout of Document Regions," filed May 9, 2003, published July 29, 2004 (Publication No. US 2004/0145593 A1).

Audiovisual information (AVI) is information extracted from audiovisual elements.

Thus, in one embodiment, using an electronic audiovisual composition (not necessarily containing video or audio data) and its metadata, visual focus points (VFPs), important audible information (AI), and audiovisual information (AVI) may be determined.

The visual focus segments, important audible information, and audiovisual information are given to the optimizer. Given the VFPs and the AI, AVI along with device and application constraints (e.g., display size, a time constraint), the optimizer selects the information to be included in the output representation (e.g., a multimedia thumbnail). In one embodiment, the selection is optimized to include the preferred visual and audible and audiovisual information in the output representation, where preferred information may include important information in the electronic audiovisual composition, user preferred, important visual information (e.g., figures), important semantic information (e.g., title), key paragraphs (output of a semantic analysis), electronic audiovisual composition context. Important information may include resolution sensitive areas of an electronic audiovisual composition. In one embodiment, the selection is based on computed time attributes and information content (e.g., importance) attributes.

In one embodiment, in response to visual and audible information segments and constraint inputs 205, such as the display size of the output device and the time span, T, which is the duration of final multimedia thumbnail, optimizer 203 performs an optimization algorithm.

The main function of the optimization algorithm is to first determine how many pages can be shown to the user, given each page is to be displayed on the display for predetermined period of time (e.g., 0.5 seconds), during the time span available.

In one embodiment, optimizer 203 then applies a linear packing/filling order approach in a manner well-known in the art to the sorted time attributes to select which figures will be included in the multimedia thumbnail. Still-image holding is applied to the selected figures of the electronic audiovisual composition. During the occupation of the visual channel by image holding, the caption is "spoken" in the audio channel. After optimization, optimizer 203 re-orders the selected visual, audio and audiovisual segments with respect to the reading order.

Other optimizers may be used to maximize the joined communicated information in time span T and in the visual display of constrained size.

As discussed above, optimizer 203 receives the output from an analyzer, which includes the characterization of visual, audible, and audiovisual information, and device characteristics, or one or more constraints (e.g., display size, available time span, user settings preference, and power capability of the device), and computes a combination of visual and audible information that meets the device constraints and utilizes the capacity of information deliverable through the available output visual and audio channels. In this way, optimizer 203 operates as a selector, or selection mechanism.

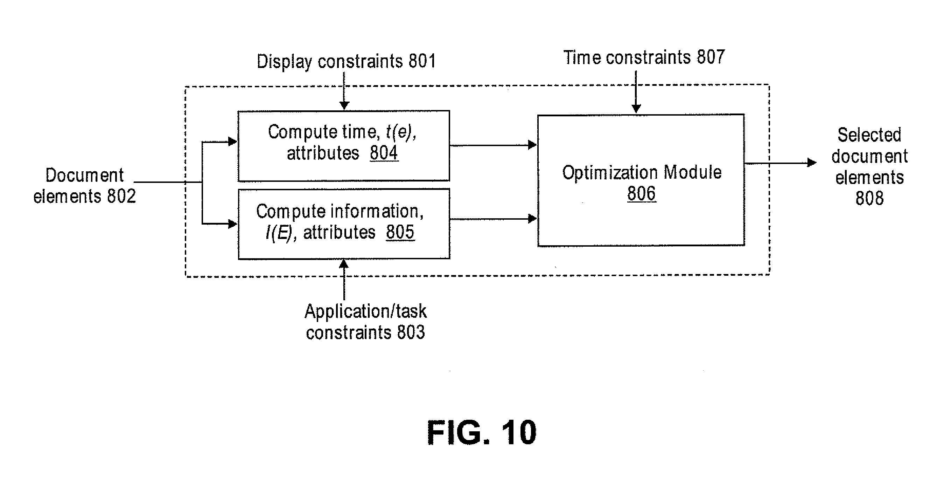

Optimizer 203 selects document elements to form MMNail based on time, application, and display size constraints. A flow diagram of one embodiment of the optimizer is presented in Figure 10. Referring to Figure 10, in optimizer 800, first, for each document element, 802 a time attribute is computed (804), i.e. time required to display the element, and an information attribute (805), i.e. information content of the element. Optimizer module 806 takes these attributes and maximizes the total information content of document elements selected for inclusion, subject to a time constraint. Display constraints of the viewing device are taken into account when computing time attributes. For example, it takes longer time to present a text paragraph in a readable form in a small viewing area. Similarly, target application and task requirements need to be taken into account when computing information attributes. For example, for some tasks the abstract or keyword elements can have higher importance than other elements such as a body text paragraph.

The optimization module maximize the total information content of the selected document elements given a time constraint, *T.*

### Computation of Time Attributes

The optimization of the selection of electronic audiovisual composition elements for the multimedia representation generally involves spatial constraints, such as display size, minimal readable text pixel size, minimal separating white space between visual or audiovisual elements, or minimal separating time intervals between audible or audiovisual elements. In such frameworks, some information content (semantic, visual) attributes are commonly associated with electronic audiovisual composition elements. In the framework described herein, in one embodiment, both the spatial presentation and time presentation are optimized. To that end, "time attributes" are associated with electronic audiovisual composition elements.

Techniques used to assign time attributes for audible, visual, and audiovisual electronic audiovisual composition elements are explained more fully in *"*Methods for Computing a Navigation Path," filed on January 13, 2006, U.S. Patent Application Serial No. 11/332,533, incorporated herein by reference, and also in B. Erol, K. Berkner, S. Joshi "Multimedia Thumbnails for Documents," Proceedings of ACM MM'06, pp. 231-240, Santa Barbara, CA, 2006, and B. Erol, K. Berkner, S. Joshi, J. Hull "Computing a Multimedia Representation for Documents Given Time and Display Constraints," Proceedings of ICME 2006, pp. 2133-2136, Toronto, Canada, 2006.

### Information Content Attributes

With respect to electronic audiovisual composition elements, information content, or importance, attributes are assigned to audio, visual, and audiovisual elements. The information content attributes are computed for different electronic audiovisual composition elements.

Some electronic audiovisual composition elements, such as title, for example, can be assigned fixed attributes, while others, such as, for example, figures, can be assigned content dependent importance attributes.

Information content attributes are either constant for an audio or visual element or computed from their content. Different sets of information content values may be made for different tasks, such as in the cases of electronic audiovisual composition understanding and browsing tasks. These are considered as application constraints.

Examples of electronic audiovisual composition elements and their types are given in Table 1 below.

**Table 1**

| Elements | Possible Element type | Preferred Element type |
|---|---|---|
| Title | V or AV | AV |
| Sub Section N | V or AV | AV |
| Figure and figure caption N | AV | AV |
| Abstract | V or AV | V |
| References | V or AV | V |
| Figure-no caption* | V | V |
| Thumbnail of page N | V | V |
| Author names | V or AV or A | V |
| Publication name | V or AV ox A | A |
| Publication date | V or AV or A | A |
| Keyword | A | A |
| Page number | A or AV | A |
| Number of pages | A | A |

| | | |
|---|---|---|
| * These figures are the ones selected for combining with figure captions. Figures with no captions or very long captions are excluded from this group in preprocessing. | | |

In one embodiment, the choices of how to represent a electronic audiovisual composition element are made based on user feedback. Some examples of reasoning for certain choices are given below.

In one embodiment, the choice between V and AV types is done based on approximately how long it would take to readout the text. One assumption that may be used is that for short text, AV is better because audio channel can be in synchronization with user's reading speed. For long text, such as abstract, this probably would not be the case and the audio channel can be annoying instead of being useful.

For very short text, such as a publication name and date, an audio channel is chosen for communication.

Author names are selected to be visual elements since the synthesizer may make errors in the pronunciation of names.

With reference to Figure 2, after selection, synthesizer 204 composes the final multimedia presentation. In one embodiment, synthesizer 204 composes the final multimedia thumbnail by executing selected multimedia processing steps determined in the optimizer. In one embodiment, synthesizer 204 receives a file, such as, for example, a plain text file or XML file, having the list of processing steps. In another embodiment, the list of processing steps may be sent to synthesizer 204 by some other means such as, for example, through socket communication or com object communication between two software modules. In yet another embodiment, the list of processing steps is passed as function parameters if both modules are in the same software. The multimedia processing steps may include the "traditional" image processing steps crop, scale, and paste, but also steps including a time component such as page flipping, pan, zoom, and speech and music synthesis.

In one embodiment, synthesizer 204 comprises a visual synthesizer 204A, an audio synthesizer 204B, and a synthesizer/composer 204C. The synthesizer uses the visual synthesis to synthesize the selected visual information into images and a sequence of images, the audio synthesizer to synthesize audible information into speech, and then the synchronizer/composer to synchronize the two output channels (audio and visual) and compose a mutlimedia presentation. Note that the audio portion of the audiovisual element is synthesized using the same speech synthesizer used to synthesize the audible information.

In one embodiment, for the visual composition performed by visual synthesizer 204A including sequences of images (without audio) such as zoom and page flipping is performed using Adobe AfterEffects, while the synchronizer/composer 204C uses Adobe Premier. In one embodiment, audio synthesizer 204B uses CMU speech synthesizing software (FestVox, http://festvox.org/voicedemos.html) to create sound for the audible information.

In one embodiment, synthesizer 204 does not include synchronizer/composer 204C. In such a case, the output of the synthesizer may be output as two separate streams, one for audio and one for visual.

The outputs of the synchronizer/composer may be combined into a single file and may be separate audio and video channels.

### Element Extraction and Semantic Labeling Based on Audiovisual Composition Type

Composition and generation of a multimedia presentation of an electronic audiovisual composition is a powerful way to view web pages, power point slides, or other static images with text (e.g., whiteboard images) on portable devices. However, for some of these electronic representations no page breaks exist (e.g., web pages), an image of each page is not available without rendering (e.g., web pages, PowerPoint slides), and/or additional metadata about the document structure is available (e.g., web pages, MSWord documents). Therefore, as illustrated and discussed below, all or some parts of the electronic audiovisual analysis described above include algorithms that are more suitable to the type of electronic audiovisual composition received. Although the processes described below are each described separately for four different types of input (e.g., real-time rendered, presentation, non-document, and inherent time progression audiovisual compositions), for electronic content that is a combination of the different types of inputs described below, a combination of algorithms may be employed to analyze received electronic content and generate a multi-media representation of the content.

### Analysis of Real-Time Rendered (RTR) Document

A real-time rendered (RTR) electronic visual composition may be thought of as a file or page that does not generally contain a visualization of the entire content of the composition. Furthermore, an RTR visual composition may not have page information because page information is generally determined at the time the RTR visual composition is rendered. Examples of RTR visual compositions include, but are not limited to hypertext markup language (HTML) web pages, Microsoft MSWord files, etc. Nevertheless, these electronic representations contain valuable semantic information about their content, such as titles, headers, figures, etc. that is difficult to obtain accurately from image based representations. For most electronic RTR visual compositions, it is it is possible to extract certain parts of electronic content and their semantic tags from the file by either parsing the electronic description (e.g., in the case of HTML) or by using the Applications Programming Interfaces (APIs) that provide access to the proprietary representations (e.g., in the case of MSWord).

In most cases, the locations of the contents, e.g., text, images, are not known until after the file is rendered for display or printing. Therefore, in a separate process, a static visual representation can be generated, or rendered, to extract locations of electronic contents of an RTR visual composition. In one embodiment, an RTR visual composition may be rendered via automatically opening a rendering application with the electronic file and performing a screen grab, automatically printing the contents of the electronic file and capturing the printed images, and/or using APIs to obtain image based representation of the electronic contents. In some of these transformations, for example print capture, it is possible to preserve some of the semantic information such as the American Standard Code for Information Interchange (ASCII) characters that are in the image representation, their locations, and font size/types. However, in transformations, semantic information can be lost. For example, when the static images are obtained via print capture, information about headings, figure captions, tables, etc are lost in the process.

In one embodiment, content matching is performed between two representations of the same content to improve the accuracy of semantic information and location information for each element in an electronic audiovisual composition. The content matching that may be used is well-known in the art. See, B. Erol, J.J. Hull, J. Graham, and D.S. Lee, "Prescient Paper: Multimedia Document Creation with Document Image Matching", IEEE International Conference on Pattern Recognition, 2004. After a more accurate description of an electronic visual composition file contents, and their associated locations, is obtained, a more accurate multimedia thumbnail and/or navigation path can be generated for the audiovisual composition.

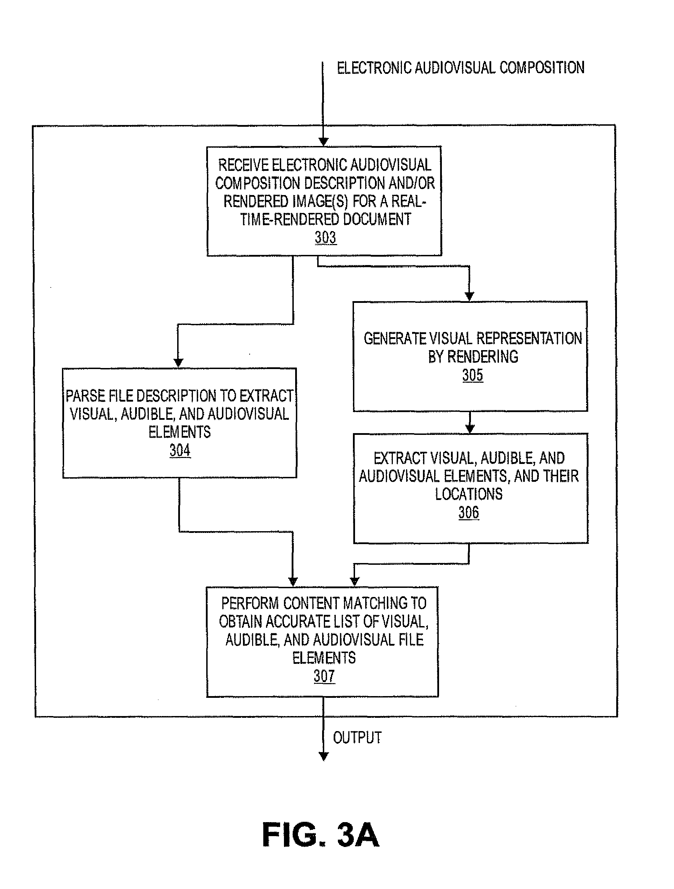

Figure 3A illustrates an embodiment of a process for processing a RTR visual composition for use in the composition of a multimedia overview of an electronic audiovisual composition, as described above in Figure 2. In one embodiment, each of the modules comprises hardware (e.g., circuitry, dedicated logic, etc.), software (such as is run on a general purpose computer system or a dedicated machine), or a combination of both.

Referring to Figure 3A, the process begins when an analyzer, such as analyzer 202 of Figure 2 receives a RTR visual composition description and/or rendered image(s) for a RTR document (processing block 303). Processing logic then parses the file description for the RTR document to extract one or more visual, audible, or audiovisual elements of the RTR document (processing block 304). Processing logic further generates a visual representation of the received RTR document by rendering the document (processing block 305). Visual, audible, and audiovisual elements, and their locations are then extracted from the rendered representation of the RTR document (processing block 306).

With the visual, audible, and audiovisual elements extracted by parsing the RTR document file and the visual, audible, and audiovisual elements extracted from the rendered representation of the RTR document, processing logic performs content matching between the two sets of extracted elements to obtain a more accurate list of one or more visual, audible, and audiovisual file elements (processing block 307) for the received RTR document file description. The list of visual, audible, and audiovisual file elements are then output by processing logic to a visual focus points identifier and an important audible and audiovisual information identifier, such as those illustrated and described with reference to Figure 2.

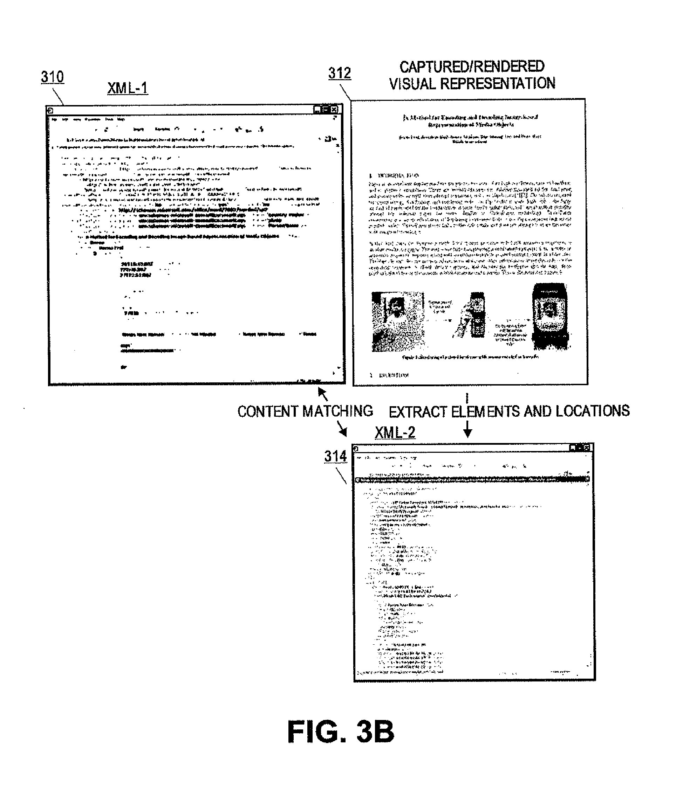

Figure 3B illustrates one example of how content matching could be performed according to embodiments discussed herein. Figure 3B shows an MSWord document described in XML 310 (illustrated and referred to herein as XML-1) and its rendered visualization 312. The visual representation can be obtained through an API or via automatically printing a web page to a local file. When a web page is printed to a local file, images of pages, the characters (along with font/size), figures, etc., and their locations may be automatically obtained. When a document file is accessed via a set of APIs enabling access to file contents, a layout analysis and optical character recognition (OCR) software are utilized to determine the characters (along with font/size), figures, etc., and their locations. Alternatively, the layout analysis or OCR results can be saved in an XML file 314 (illustrated as XML-2). Although the generated XML representation, XML-2, may be less accurate in terms of semantic meanings of electronic contents (e.g., links between figures and figure captions may not exist), XML-2 contains accurate location information for figures and text. Content matching can be used to generate a third XML file (not shown) that combines accurate information from XML- and XML-2.

Furthermore, content matching can be performed based on the type of the content. For example, for text content, using 3-word-grams would often be sufficient to match sentences and paragraphs. As illustrated in Figure 3B, the electronic content description tags "A Method for Encoding and Decoding Image-based Representation of Media Objects" as a title. By searching for 3-word-grams "A Method for", "Method for Encoding", "for Encoding and", etc. in XML-2, it is possible to find the location of this text in the rendered image. If, on the other hand, the content is a figure, then image content matching techniques can be employed, such as color histogram, color layout, and/or edge histograms, to identify the location of the image. Because the search space of average documents is quite limited (i.e., a search space of the contents of two XML text files and the image representation), it is possible to achieve high accuracy in content matching. However, the processes and examples described above are not limited to the number of sources utilized for content matching. For information on using the 3-word-grams, see, B. Erol, J.J. Hull, J. Graham, and D.S. Lee, "Prescient Paper: Multimedia Document Creation with Document Image Matching", IEEE International Conference on Pattern Recognition, 2004.

Note that the files need not be in XML format; they can be in any other form of text-description. If a three-word-gram is used for content matching, descriptions in the form of text are preferred over binary files.

### Analysis of Presentation Compositions

Electronic presentation compositions (e.g., documents), such as Microsoft PowerPoint (PPT) files, are more than static visual representations of the document they represent. It is commonplace for PPT files to include audio and video clips, animations, etc. Therefore, when generating a new multimedia presentation, such as a multimedia thumbnail or a navigation path, from such electronic representations, the multimedia content can be rendered and included as an input to MMNail generation algorithm. An embodiment of a process for analyzing a presentation composition is provided below.

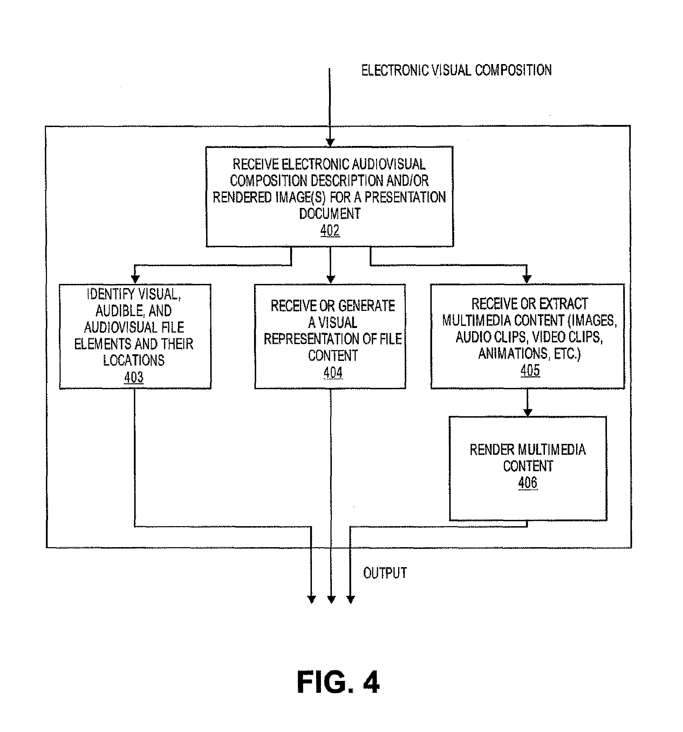

Figure 4 illustrates an embodiment of a process for processing a presentation composition for use in the composition of a multimedia overview of an electronic audiovisual composition, as described above in Figure 2. In one embodiment, each of the modules comprises hardware (e.g., circuitry, dedicated logic, etc.), software (such as is run on a general purpose computer system or a dedicated machine), or a combination of both.

Referring to Figure 4, the process begins when an analyzer, such as analyzer 202 of Figure 2, receives a presentation document description and/or rendered image(s) of the presentation document (processing block 402). Processing logic then identifies visual, audible, and audiovisual file elements and their locations (processing block 403). As described above, the presentation document elements may be identified by parsing the received presentation file description and/or accessing the description with appropriate APIs.

Processing logic also receives and/or generates a visual representation of the content of the presentation file (processing block 404). Although not shown, processing logic may also capture a rendered representation of the presentation file, such as by OCR or appropriate APIs in order to provide a secondary file for content matching, as discussed above in Figures 3A ad 3B.

Additionally, processing logic receives or extracts multimedia content, if any, from the presentation file (processing block 405). Such multimedia content may include, but is not restricted to, images, audio clips, video clips, animates, etc. contained within the presentation composition. Processing logic then causes the received or extracted multimedia content to be rendered (processing block 406).

Then, each of the identified file element locations results (processing block 403), received/generated representation of content (processing block 404), and rendered multimedia content (processing block 406) are outputted by processing logic to be utilized as input by a visual focus points identifier module, as well audible and audiovisual information identifier module.

Moreover, in one embodiment, meeting document collections that contain video, audio, meeting documents, whiteboard, etc. can be converted into a multimedia thumbnail representation or navigation path for a multimedia thumbnail as illustrated and described above in Figure 4.

### Analysis of Non-document Images

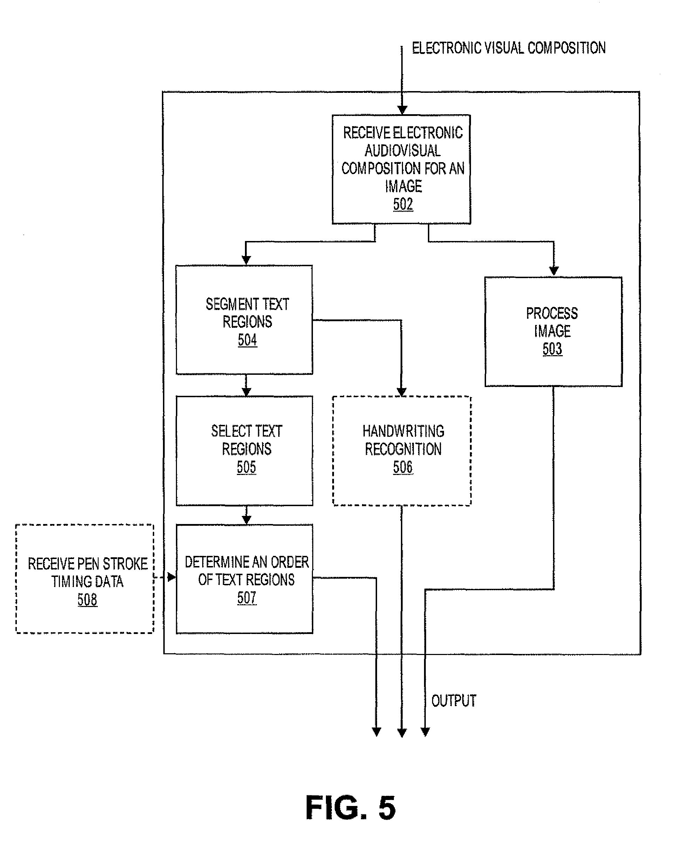

People are increasingly using portable devices such as cell phone cameras and digital cameras, to capture images with text, such as business card images and whiteboard images. However, the display resolution of the portable device is often not sufficient to view the content of these images, particularly the content of whiteboard images. Therefore, a multimedia thumbnail, or multimedia thumbnail navigation path, for such non-document images can make it easy to view such images on small displays. One process for analyzing a non-document image, such as a whiteboard image is provided below in Figure 5. The non-document image may comprise a "picture", or other single page or frame captured by a digital imaging device, such as digital camera. The picture may include handwritten notes, whiteboard, business card, document pages, etc, with greater lighting and content variations compare to those images captured by scanners, screen capture, or obtained via printing. Figure 5 illustrates an embodiment of a process for processing a non-document image for use in the composition of a multimedia overview of an electronic audiovisual composition, as described above in Figure 2. In one embodiment, each of the modules comprises hardware (e.g., circuitry, dedicated logic, etc.), software (such as is run on a general purpose computer system or a dedicated machine), or a combination of both.

Referring to Figure 5, the process begins when an analyzer, such as analyzer 202 of Figure 2, receives an electronic audiovisual composition for a non-document image (processing block 502). Processing logic then processes the image (processing block 503). In one embodiment, processing logic performs color enhancement to maximize image colors for display on a device with limited display abilities. Processing logic may also adjust/rectify the contrast of an image so that image elements may better be distinguished by the user of a device with limited display abilities. Processing logic may also perform removal.

Processing logic further segments text regions within the image (processing block 504), utilizing any one of many well known image segmentation algorithms, or the segmentation technique described in Maderlechner et al. Processing logic then selects the text regions from the segmented image (processing block 505) and determines an order of text regions (processing block 507). In one embodiment, the ordering of text regions is determined by comparing the image text region segments with received pen stroke timing data (processing block 508). Such data may be available when an image represents a whiteboard image capture. As such, the text regions may be ordered chronologically, based on length of time spent to create a text region, etc.

In one embodiment, processing logic then applies handwriting recognition algorithms to the text region segments of the received image (processing block 506) to extract textual and/or semantic content from one or more image segments. As a result, even though the audiovisual composition for an image does not contain text/semantic information explicitly, such information can be extracted by processing logic, and utilized in the creation of a multimedia thumbnail.

Next, processing logic outputs the results of the image processing (processing blocks 503, 507, and optionally processing block 506) to be used as an input by a visual focus points identifier, and an audible and audiovisual information identifier, such as those described an illustrated with reference to Figure 2.

### Analysis of an Audiovisual Composition with Inherent Time Progression

In one embodiment, the ordering of document elements is determined by reading order. However, some documents such as web blogs and newspapers articles have a timeline, or timing characteristics, associated with each text segment or paragraph. These timing characteristics can be extracted from the electronic description and/or rendered image, and be used to determine the ordering of components in a multimedia thumbnail presentation or to assign information attributes.

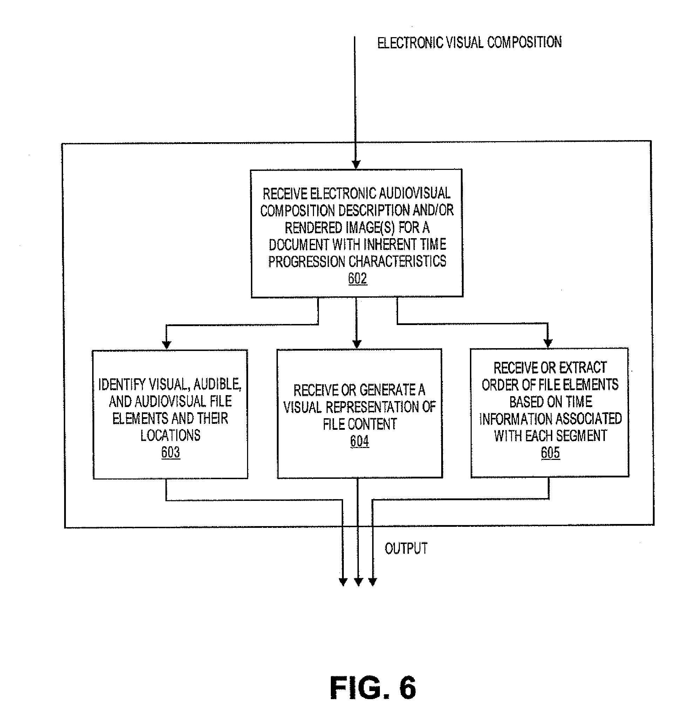

Figure 6 illustrates an embodiment of a process for processing a document description with inherent timing data for use in the composition of a multimedia overview of an electronic visual composition, as described above in Figure 2. In one embodiment, each of the modules comprises hardware (e.g., circuitry, dedicated logic, etc.), software (such as is run on a general purpose computer system or a dedicated machine), or a combination of both.

Referring to Figure 6, the process begins when an analyzer, such as analyzer 202, receives an electronic visual composition description and/or rendered image(s) for a document with inherent time progression characteristics (processing block 602). Processing logic then, similarly to that discussed above, identifies visual, audible, and audiovisual file elements and their locations (processing block 603) for the received document with inherent time progression characteristics. Processing logic further receives or generates a visual representation of the file content (processing block 604) for the received composition description with inherent time progression characteristics. Although not shown, processing logic may further perform content matching and semantic analysis, as described above in Figures 3A and 3B.

Because the electronic composition includes inherent time progression characteristics, processing logic further receives or extracts the file components in order based on the time information associated with each segment of the document (processing block 604). Time stamps can be extracted from the blogs as published, often the time is printed in the blog. They could also be extracted from a log-file. The time information, identified elements, and visual representation are then outputted to be used as an input by a visual focus points identifier and an important audible and audiovisual information identifier, such as those described and illustrated with reference to Figure 2.

### Applications

The techniques described herein may be potentially useful for a number of applications. For example, the techniques may be used for electronic audiovisual composition browsing for devices, such as mobile devices and multi-function peripherals (MFPs).

For example, when performing interactive electronic audiovisual composition browsing on a mobile device, the electronic audiovisual composition browsing can be re-defined, for example, instead of zoom and scroll, operations may include, play, pause, fast forward, speedup, and slowdown.

In another mobile device application when performing electronic audiovisual composition viewing and reviewing on mobile devices, the techniques set forth herein may be used to allow a longer version of a multimedia thumbnail presentation (e.g., 15 minutes long) to be used to provide not only an overview but also understand the content of an electronic audiovisual composition. This application seems to be suitable for devices with limited imaging capabilities, but preferred audio capability, such as cell phones. After browsing and viewing an electronic audiovisual composition with a mobile device, in one embodiment, the mobile device sends it to a device (e.g., an MFP) at another location to have the device perform other functions on the electronic audiovisual composition (e.g., print the electronic audiovisual composition). In one MFP application, the techniques described herein may be used for electronic audiovisual composition overview. For example, when a user is copying some electronic audiovisual compositions at the MFP, as the pages are scanned, an automatically computed electronic audiovisual composition overview may be displayed to the user, giving a person a head start in understanding the content of the electronic audiovisual composition.

An image processing algorithm performing enhancement of the electronic audiovisual composition image inside an MFP may detect regions of problematic quality, such as low contrast, small font, halftone screen with characteristics interfering with the scan resolution, etc. A multimedia thumbnail, as discussed herein, may be displayed on the copier display (possibly without audio) in order to have the user evaluating the quality of a scanned electronic audiovisual composition (i.e., the scan quality) and suggest different settings, e.g., higher contrast, higher resolution.

In a Translation Application, the language for the audio channel can be selected by the user and audible information may be presented in language of choice. In this case, the optimizer functions differently for different languages since the length of the audio would be different. That is, the optimizer results depend on the language. In one embodiment, visual electronic audiovisual composition text is altered. The visual electronic audiovisual composition portion can be re-rendered in a different language.

In one embodiment, the optimizations are computed on the fly, based on interactions provided by user. For example, if the user closes the audio channel, then other visual information may lead to different visual representation to accommodate this loss of information channel. In another example, if the user slows downs the visual channel (e.g., while driving a car), information delivered through the audio channel may be altered. Also, animation effects such as, for example, zoom and pan, may be available based on the computational constraints of the viewing device.

In one embodiment, the multimedia presentations are used to assist disabled people in perceiving electronic audiovisual composition information. For example, visual impaired people may want to have small text in the form of audible information. In another example, color blind people may want some information on colors in an electronic audiovisual composition be available as audible information in the audio channel.

### An Example of a Computer System

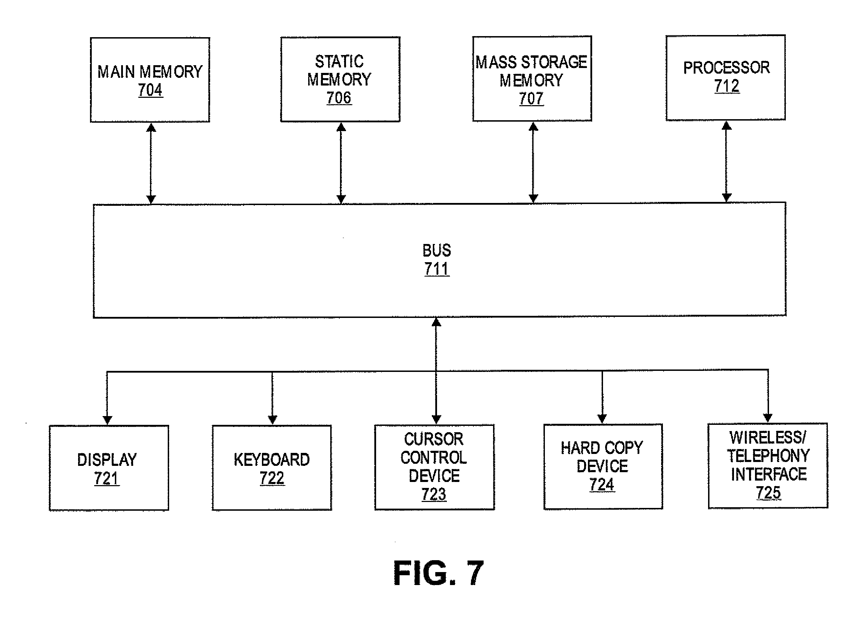

Figure 7 is a block diagram of an exemplary computer system that may perform one or more of the operations described herein. Referring to Figure 7, computer system 700 may comprise an exemplary client or server computer system. Computer system 700 comprises a communication mechanism or bus 711 for communicating information, and a processor 712 coupled with bus 711 for processing information. Processor 712 includes a microprocessor, but is not limited to a microprocessor, such as, for example, Pentium Processor, etc.

System 700 further comprises a random access memory (RAM), or other dynamic storage device 704 (referred to as main memory) coupled to bus 711 for storing information and instructions to be executed by processor 712. Main memory 704 also may be used for storing temporary variables or other intermediate information during execution of instructions by processor 712.

Computer system 700 also comprises a read only memory (ROM) and/or other static storage device 706 coupled to bus 711 for storing static information and instructions for processor 712, and a data storage device 707, such as a magnetic disk or optical disk and its corresponding disk drive. Data storage device 707 is coupled to bus 711 for storing information and instructions.

Computer system 700 may further be coupled to a display device 721, such as a cathode ray tube (CRT) or liquid crystal display (LCD), coupled to bus 711 for displaying information to a computer user. An alphanumeric input device 722, including alphanumeric and other keys, may also be coupled to bus 711 for communicating information and command selections to processor 712. An additional user input device is cursor control 723, such as a mouse, trackball, trackpad, stylus, or cursor direction keys, coupled to bus 711 for communicating direction information and command selections to processor 712, and for controlling cursor movement on display 721.

Another device that may be coupled to bus 711 is hard copy device 724, which may be used for printing instructions, data, or other information on a medium such as paper, film, or similar types of media. Furthermore, a sound recording and playback device, such as a speaker and/or microphone may optionally be coupled to bus 711 for audio interfacing with computer system 700. Another device that may be coupled to bus 711 is a wired/wireless communication capability 725 to communication to a phone or handheld palm device. Note that any or all of the components of system 700 and associated hardware may be used in the present invention. However, it can be appreciated that other configurations of the computer system may include some or all of the devices.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

## Claims

1. A method comprising:
receiving an electronic composition description;
rendering a visual representation of electronic visual composition description;
generating a content description that includes semantic information and location information for elements within the electronic composition description;
identifying at least one of an audible, visual, an audiovisual element from the content description; and
generating a multimedia overview of the electronic composition description that includes a selected set of the identified audible, visual, and audiovisual elements.

2. The method defined in claim 1 wherein the electronic composition description is a description of a real-time rendered document.

3. The method defined in claim 1 wherein the electronic composition description is a description of a presentation document.

4. The method defined in claim 1 wherein the electronic composition description is a description of a non-document image.

5. The method defined in claim 4 further comprising:
processing the image including performing at least one of, rectifying a contrast of the picture image, or enhancing a color content of the image; and
generating the multimedia overview of the electronic composition description from the identified one or more audible, visual, and visual elements, and the processed picture image.

6. The method defined in claim 4 further comprising:
segmenting text regions of the non-document image;
selecting one or more text regions from among the segmented text regions;
determining an order of the selected one or more text regions; and
generating the multimedia overview of the electronic composition description from the identified audible, visual, and audiovisual elements, and the selected one or more text regions based on the determined order of those regions.

7. The method of claim 6, wherein the order is a time order determined from received timing data corresponding to the segmented text regions.

8. The method defined in claim 6 further comprising:
performing handwriting recognition on each of the segmented text regions to generate semantic content from the text regions; and
generating the multimedia overview of the electronic visual composition description from the identified one or more audible, visual, and audiovisual elements, and the semantic content obtained from the text regions.

9. The method defined in claim 1 wherein the electronic visual composition description is a description of a document that includes one or more time attributes associated with the electronic visual composition.

10. The method defined in claim 1, wherein the generating a multimedia overview of the electronic visual composition comprises:
selecting a set of one or more of the identified one or more audible, visual and audiovisual elements for inclusion into the multimedia overview is based on time and information content attributes.

11. The method defined in Claim 10 wherein the information content attributes are based on one or more of application, user specific, and display size of a device for which the multimedia overview is being generated constraints.

12. The method defined in Claim 1 wherein the generating the multimedia overview further comprises composing the multimedia overview using the set of one or more of the audible, visual and audiovisual elements comprises outputting a navigation path representation by which the set of one or more of the audible, visual and audiovisual elements are processed when creating the multimedia representation.

13. The method defined in claim 1 further comprises:
rendering a visual representation of the electronic composition;
extracting one or more audible, visual, and audiovisual elements from the rendered visual representation; and
content matching the extracted one or more audible, visual, and audiovisual elements and the identified one or more audible, visual, and audiovisual elements, to obtain a more accurate set of one or more audible, visual, and audiovisual elements; and
generating the multimedia overview with a set of one or more audible, visual, and audiovisual elements selected from the more accurate set of one or more audible, visual, and audiovisual elements.

14. The method defined in claim 1 further comprises:
extracting multimedia content from the received electronic composition description; and
rendering the extracted multimedia content in the multimedia overview.

15. The method of claim 1 further comprises:
extracting an order of the one or more audible, visual, and audiovisual elements from the content description.

16. An apparatus comprising:
means for receiving an electronic composition description;
means for rendering a visual representation of electronic visual composition description;
means for generating a content description that includes semantic information and location information for elements within the electronic composition description;
means for identifying at least one of an audible, visual, an audiovisual element from the content description; and
means for generating a multimedia overview of the electronic composition description that includes a selected set of the identified audible, visual, and audiovisual elements.

17. The apparatus defined in claim 16 wherein the electronic composition description is a description of a real-time rendered document.

18. The apparatus defined in claim 1 wherein the electronic composition description is a description of a presentation document.

19. The apparatus defined in claim 1 wherein the electronic composition description is a description of a non-document image.

20. The apparatus defined in claim 19 further comprising:
means for processing the image including performing at least one of, rectifying a contrast of the picture image, or enhancing a color content of the image; and
means for generating the multimedia overview of the electronic composition description from the identified one or more audible, visual, and visual elements, and the processed picture image,

21. The apparatus defined in claim 19 further comprising:
means for segmenting text regions of the non-document image;
means for selecting one or more text regions from among the segmented text regions;
means for determining an order of the selected one or more text regions; and
means for generating the multimedia overview of the electronic composition description from the identified audible, visual, and audiovisual elements, and the selected one or more text regions based on the determined order of those regions.

22. The apparatus of claim 21, wherein the order is a time order determined from received timing data corresponding to the segmented text regions.

23. The apparatus defined in claim 21 further comprising:
means for performing handwriting recognition on each of the segmented text regions to generate semantic content from the text regions; and
means for generating the multimedia overview of the electronic visual composition description from the identified one or more audible, visual, and audiovisual elements, and the semantic content obtained from the text regions.

24. The apparatus defined in claim 16 wherein the electronic visual composition description is a description of a document that includes one or more time attributes associated with the electronic visual composition.

25. The apparatus defined in claim 16, wherein means for generating a multimedia overview of the electronic visual composition comprises:
means for selecting a set of one or more of the identified one or more audible, visual and audiovisual elements for inclusion into the multimedia overview is based on time and information content attributes.

26. The apparatus defined in Claim 25 wherein the information content attributes are based on one or more of application, user specific, and display size of a device for which the multimedia overview is being generated constraints.

27. The apparatus defined in Claim 16 wherein means for generating the multimedia overview further comprises means for composing the multimedia overview using the set of one or more of the audible, visual and audiovisual elements comprises outputting a navigation path representation by which the set of one or more of the audible, visual and audiovisual elements are processed when creating the multimedia representation.

28. The apparatus defined in claim 16 further comprises:
means for rendering a visual representation of the electronic composition;
means for extracting one or more audible, visual, and audiovisual elements from the rendered visual representation; and
means for content matching the extracted one or more audible, visual, and audiovisual elements and the identified one or more audible, visual, and audiovisual elements, to obtain a more accurate set of one or more audible, visual, and audiovisual elements; and
means for generating the multimedia overview with a set of one or more audible, visual, and audiovisual elements selected from the more accurate set of one or more audible, visual, and audiovisual elements.

29. The apparatus defined in claim 16 further comprises:
means for extracting multimedia content from the received electronic composition description; and
means for rendering the extracted multimedia content in the multimedia overview.

30. The method of claim 16 further comprises:
means for extracting an order of the one or more audible, visual, and audiovisual elements from the content description.
